# EUROPÄISCHE PATENTSCHRIFT

(11) **EP 2 040 948 B1**
(45) Veröffentlichungstag und Bekanntmachung des Hinweises auf die Patenterteilung: **18.11.2009**
(21) Anmeldenummer: 07801145.9
(22) Anmeldetag: 12.07.2007
(51) Int. Cl.: B60J 7/02

(54) **ANBINDUNGSVORRICHTUNG FÜR EINE HALTEEINRICHTUNG EINES DECKELS EINES ÖFFNUNGSFÄHIGEN FAHRZEUGDACHES**
CONNECTOR DEVICE ON A RETAINER DEVICE FOR A COVER OF AN OPENABLE VEHICLE ROOF
DISPOSITIF DE LIAISON POUR UN ÉLÉMENT DE RETENUE D'UN CAPOT POUR UN TOIT DE VÉHICULE AUTOMOBILE POUVANT S'OUVRIR

(30) Priorität: 14.07.2006 DE 102006032700
(43) Veröffentlichungstag der Anmeldung: 01.04.2009
(73) Patentinhaber: Webasto AG, 82131 Stockdorf (DE)
(72) Erfinder: WENZEL, Reinhard, 80999 München (DE); HÖLZEL, Dominik, 82194 Gröbenzell (DE)
(86) Internationale Anmeldenummer: PCT/DE2007/001239
(87) Internationale Veröffentlichungsnummer: WO 2008/006353

(56) Entgegenhaltungen:
- EP-A- 1 254 800
- DE-A1- 10 320 820
- DE-B3-102004 050 609
- DE-C1- 3 532 679
- DE-U1- 20 023 526

## Beschreibung

Die Erfindung betrifft eine Anbindungsvorrichtung für eine Halteeinrichtung eines Deckels eines öffnungsfähigen Fahrzeugdaches nach dem Oberbegriff des Anspruchs 1.

Aus der DE 103 09 593 A1 ist ein Deckel für ein Fahrzeugdach sowie ein Herstellungsverfahren hierfür bekannt. Ein derartiger Deckel ist beispielsweise geeignet mit der erfindungsgemäßen Anbindungsvorrichtung mit einer Verstellmechanik eines öffnungsfähigen Fahrzeugdaches verbunden zu werden. Hierzu weist der Deckel Deckelhalterungen auf. Weiterhin besitzt der Deckel eine im eingebauten Zustand nach unten vorspringende seitliche Blende, welche die Befestigungspunkte des Deckels an der Verstellmechanik optisch abdecken soll.

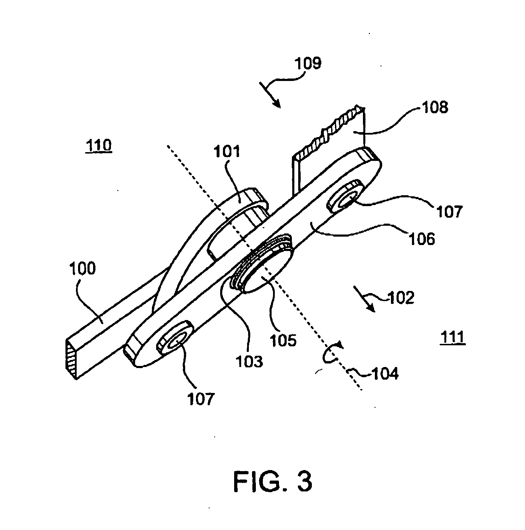

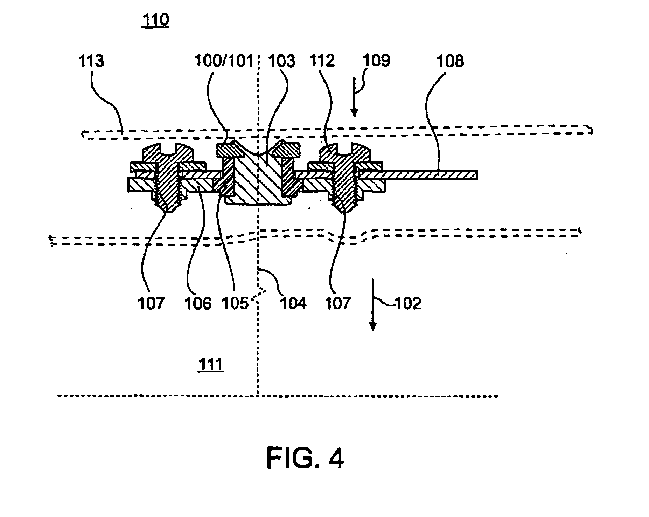

Derartige Deckel weisen gemäß einem internen Stand der Technik der Anmelderin üblicherweise zwei Befestigungslöcher pro Deckelhalterung auf. Derartig abgeänderte Deckel werden üblicherweise mit einer Anbindungsvorrichtung, wie sie in den Figuren 3 und 4 schematisch dargestellt ist, mit der Verstellmechanik, insbesondere der Betätigungskinematik des öffnungsfähigen Fahrzeugdaches verbunden. In Figur 3 ist in perspektivischer Darstellung abschnittsweise ein Betätigungshebel 100 einer Betätigungs- oder Verstellkinematik eines öffnungsfähigen Fahrzeugdaches dargestellt. Der Betätigungshebel 100 besitzt ein freies Ende 101. Vom freien Ende 101 geht in einer Richtung 102 zur Fahrzeugmittellängsebene hin ein Befestigungsbolzen 103 ab. Der Befestigungsbolzen 103 sitzt drehfest im Betätigungshebel 100. Auf dem Befestigungsbolzen 103 ist um eine Mittelachse 104 drehbar eine Kunststoffbuchse 105 angeordnet. Die Kunststoffbuchse 105 steht formschlüssig mit einer Halteplatte 106 in Verbindung. Die Halteplatte 106 besitzt Befestigungsöffnungen 107, in die ein geeignetes Befestigungsmittel 112, z.B. eine Schraube, zur Verbindung mit einer Halteeinrichtung 108 des Dachdeckels eingesetzt werden kann. Die Halteeinrichtung 108 ist beispielsweise ein abgewinkelter Bereich eines Deckelinnenblechs und sitzt in Fahrzeugquerrichtung 102 gesehen zwischen dem Betätigungshebel 100 und der Halteplatte 106. Eine derartige Anordnung erfordert eine Schraubmontage in Richtung einer Montagerichtung 109 von einer Fahrzeugaußenseite 110 in Richtung zur Fahrzeuginnenseite 111 hin.

Insbesondere aus Figur 4 wird deutlich, dass bei einer Montagerichtung 109 von der Fahrzeugaußenseite 110 hin zur Fahrzeuginnenseite 111 eine PU-Umschäumung oder eine Sichtblende 113, welche vom Deckel nach unten abgeht, um die Anbindungsstellen des Deckels an der Verstellmechanik optisch zu verdecken, hinderlich ist. Dieses Problem wurde bisher dadurch gelöst, dass die PU-Umschäumung des Deckels im Bereich der Befestigungs- bzw. Halteeinrichtungen 108 unterbrochen wurde und anstelle der PU-Umschäumung eine Kunststoffblende eingesetzt wird, die zum Zwecke der Montage und ggf. der Demontage entfernt werden kann, um den Zugang zu den Schraubenköpfen zu gewährleisten. Ein weiterer Lösungsansatz geht dahin, die Kunststoffblende 113 entfallen zu lassen und die in dem Bereich der Halteeinrichtungen 108 vorzusehende PU-Umschäumung so dünn zu gestalten, dass diese im Schraubfall verformt, z.B. elastisch nach oben weggebogen werden kann, um an die Schrauben 112 zu gelangen. Die vorbeschriebene Anbindungsvorrichtung gemäß dem Stand der Technik hat als Nachteil, dass relativ lange Montagezeiten zur Montage des Deckels an der Verstellkinematik erforderlich sind, da entweder die dünne PU-Umschäumung im Bereich der Anbindungsstellen hochgebogen werden muss, um an die Schrauben zu gelangen oder die Kunststoffblende im Nachhinein als separates Teil eingesetzt werden muss. Beide Varianten haben einen nicht zufriedenstellenden optischen Eindruck zur Folge, da im Falle einer dünnen PU-Umschäumung im Bereich der Anbindungsstellen die Gefahr besteht, dass diese durch das Hochbiegen sich nicht mehr ganz zurückverformt und wellig bleibt. Der Einsatz einer Kunststoffblende hat den Nachteil, dass eine aufwändige Abstimmung der optisch sichtbaren Fläche stattfinden muss, damit ein möglichst geringer Unterschied zwischen der Kunststoffblende und dem anschließenden PU-Umschäumungsbereich wahrnehmbar ist. Es bleibt jedoch immer eine Unterbrechung optischer Linien. Zudem ist das Vorsehen einer Kunststoffblende kostenintensiv, da ein zusätzliches Bauteil erforderlich ist. Abgesehen von oben Genanntem besteht weiterhin das Bedürfnis die Anbindungsvorrichtung in ihrem Aufbau zu vereinfachen und insbesondere hinsichtlich ihres Gewichts zu reduzieren. Gleichzeitig soll eine einfache Montage ermöglicht werden, wobei insbesondere der optische Eindruck im Bereich von Anbindungsstellen eines Deckels an der Verstellmechanik verbessert werden soll.

Diese Aufgabe wird mit einer Anbindungsvorrichtung mit den Merkmalen des Einspruchs 1 gelöst. Vorteilhafte Ausführungsformen sind in den Unteransprüchen angegeben.

Bei der erfindungsgemäßen Anbindungsvorrichtung ist insbesondere von Vorteil, dass eine Montagerichtung, insbesondere eine Schraubrichtung von der Fahrzeuginnenseite hin zur Fahrzeugaußenseite vorgesehen ist, so dass eine durchgehende abdeckende Blende vom Deckel abgehend nach unten vorgesehen werden kann, um die Anbindungsstellen optisch zu verdecken. Beispielsweise kann die PU-Umschäumung in gleichbleibender Dicke an der Anbindungsstelle vorbeigeführt werden, so dass zum einen eine Kunststoffblende entfallen kann und andererseits die PU-Umschämung auch an dieser Stelle stabil genug ist, so dass keine unerwünschten Welligkeiten auftreten. Weiterhin vorteilhaft ist, dass die bisher verwendete Halteplatte entfallen kann und in bevorzugter Art und Weise durch eine einfach herzustellende und im Gewicht wesentlich leichtere Unterlegscheibe ersetzt ist. Weiterhin ist vorgesehen, eine Halteeinrichtung eines Deckels für ein öffnungsfähiges Fahrzeugdach direkt an einem Lagerbolzen der Anbindungsvorrichtung, besonders bevorzugt konzentrisch zu seiner Mittelachse zu befestigen. Hierbei bietet sich insbesondere ein Lagerbolzen an, welcher über eine zentrale Durchgangsöffnung mit einem Innengewinde verfügt, in das eine Befestigungsschraube eingedreht werden kann. Die Befestigungsschraube hält unter Verwendung einer Unterlegscheibe die Halteeinrichtung des Deckels drehfest und axial fest. Der Lagerbolzen ist bzgl. eines Betätigungshebels der Verstellmechanik drehbar gelagert und in einer besonders bevorzugten Ausführungsform unverlierbar im Betätigungshebel eingesetzt, insbesondere unter Verwendung einer Unterlagescheibe vertaumelt.

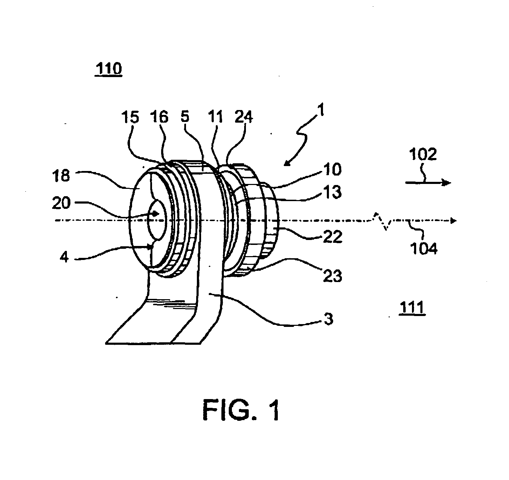

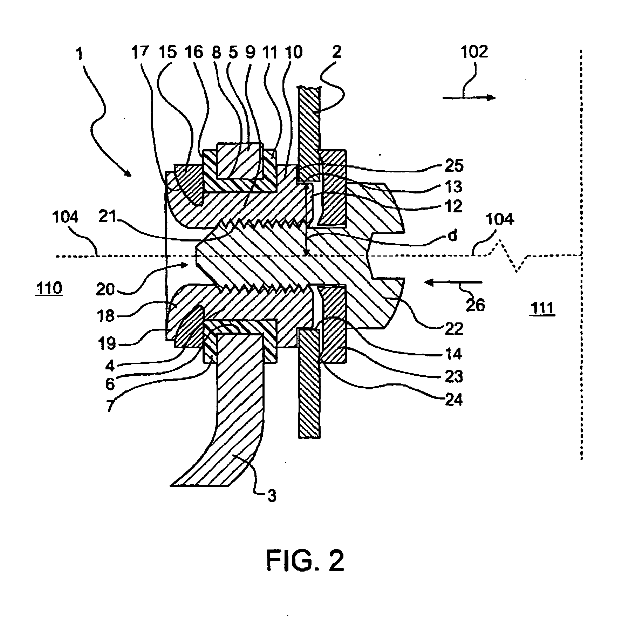

Im Folgenden wird die Erfindung anhand der Figuren 1 und 2 beispielhaft näher erläutert. Es zeigen:
- Figur 1:: eine perspektivische Ansicht auf eine erfindungsgemäße Anbindungsvorrichtung;
- Figur 2:: einen Querschnitt im Bereich einer Mittelachse durch die erfindungsgemäße Anbindungsvorrichtung gemäß Figur 1.

Eine erfindungsgemäße Ausführungsform einer Anbindungsvorrichtung 1 gemäß Figuren 1 und 2 für eine Halteeinrichtung 2 eines Deckels eines öffnungsfähigen Fahrzeugdachs an eine Betätigungskinematik, bestehend aus einem Betätigungshebel 3, der einen Lagerbolzen 4 mit einer Mittelachse 104 besitzt, um die der Betätigungshebel 3 relativ zum Deckel schwenkbar gelagert ist. Die Halteeinrichtung 2 ist dabei fest mit dem Deckel (nicht gezeigt) verbunden. An seinem freien Ende 5 besitzt der Betätigungshebel 3 eine Ausnehmung 6, welche ebenfalls die Mittelachse 104 besitzt.

In der Ausnehmung 6 sitzt eine Gleitschicht 7, welche im Querschnitt U-förmig ausgebildet ist und als innenseitige Umspritzung der Ausnehmung 6 ausgeführt ist. Der Lagerbolzen 4 ist mit einer Gleitfläche 8 um die Mittelachse 104 drehbar bezüglich des Betätigungshebels 3 eingesetzt.

Der Lagerbolzen 4 besitzt einen zylindrischen Abschnitt 9, mit dem er die Ausnehmung 6 im Lagerbolzen 4 durchgreift. An einem zu einer Fahrzeuginnenseite 111 zugewandten Ende besitzt der Lagerbolzen 4 einen umlaufenden Bund 10, welcher sich in axialer Richtung der Mittelachse 104 an der Gleitschicht 7, insbesondere an einem fahrzeuginnenseitigen Schenkel 11 der Gleitschicht 7 axial abstützt.

Auf den umlaufenden Bund 10 folgt axial in Richtung zur Fahrzeuginnenseite 111 eine Aufnahmeeinrichtung für die Halteeinrichtung 2, welche im Ausführungsbeispiel gemäß Figur 2 als Vorsprung 12 ausgebildet ist. Der Vorsprung 12 bildet zusammen mit dem umlaufenden Bund eine Stufe 13, auf der die Halteeinrichtung 2 mittels einer korrespondierenden Ausnehmung 14 sitzt.

Gegenüberliegend zum umlaufenden Bund 10 sitzt fahrzeugaußenseitig (Fahrzeugaußenseite 110) eine Unterlegscheibe 15, welche gegen einen zweiten Schenkel 16 der im Querschnitt U-förmigen Gleitschicht 7 gesetzt ist. Die Unterlegscheibe 15 weist zur Fahrzeugaußenseite 110 hin eine bombierte Abschrägung 17 auf. Gegen die bombierte Abschrägung 17 ist ein fahrzeugaußenseitiges freies Ende 18 des Lagerbolzens 3 plastisch verformt, insbesondere vertaumelt.

Das freie Ende 18 bildet somit einen trichterartigen Kragen 19, welcher im Zusammenspiel mit der Unterlegscheibe 15 und dem umlaufenden Bund 10 für eine in Axialrichtung bezüglich der Mittelachse 104 unverlierbare Lagerung des Lagerbolzens 4 im Betätigungshebel 3 sorgt.

Weiterhin besitzt der Lagerbolzen 4 eine zentrale Durchgangsöffnung 20, welche als Mittelachse die Mittelachse 104 besitzt. Zumindest im Bereich des zylindrischen Abschnittes 9 besitzt die Durchgangsöffnung 20 ein Innengewinde 21, in welches eine Befestigungsschraube 22 als Befestigungsmittel einsetzbar ist. Die zentrale Durchgangsöffnung 20 kann selbstverständlich als durchgehende Öffnung oder aber auch als Sackloch-Öffnung ausgebildet sein.

Besonders bevorzugt ist der Befestigungsschraube 22 eine Unterlegscheibe 23 zugeordnet, welche randlich umlaufend zahnartige Vorsprünge 24 aufweist. Die Abmessungen der Befestigungsschraube 22, der Unterlegscheibe 23 und der Vorsprünge 24 ist derart bemessen, dass die Halteeinrichtung 2 mittels der Befestigungsschraube 22 und der Unterlegscheibe 23 gegen eine freie Stirnfläche 25 des umlaufenden Bundes 10 gepresst werden kann, so dass die Halteeinrichtung 2 in Axialrichtung fest mit dem Lagerbolzen 4 verbunden ist.

In besonders bevorzugter Art und Weise ist der Abstand d der Stufe 13 von der Mittelachse 104 in Umfangsrichtung gesehen nicht konstant. An die Umfangskontur der Stufe 13 ist bevorzugt die korrespondierende Ausnehmung 14 der Halteeinrichtung 2 angepasst, so dass ein verdrehsicherer, formschlüssiger Sitz der Halteeinrichtung 2 auf dem Lagerbolzen 4 gewährleistet ist. Beispielsweise kann die Stufe 13 an einer oder mehreren Stellen Abflachungen aufweisen, die mit entsprechenden korrespondierenden Bereichen der Ausnehmung 14 zusammenwirken, so dass eine Verdrehung der Halteeinrichtung bezüglich des Lagerbolzens 4 ausgeschlossen ist. Weiterhin ist die Ausnehmung 14 bevorzugt in Fahrzeughochrichtung (z-Richtung) als Langloch ausgebildet, so dass der Deckel in Hochrichtung relativ zur Verstellmechanik einstellbar und justierbar ist.

Bei der erfindungsgemäßen Anbindungsvorrichtung 1 ist von besonderem Vorteil, dass die Montagerichtung 26 der Befestigungsschraube 22 von der Fahrzeuginnen- zur Fahrzeugaußenseite hin gerichtet ist, so dass fahrzeugaußenseitig hierfür kein Freiraum vorgehalten werden muss. Hierdurch ist es ermöglicht, eine gegebenenfalls vorhandene PU-Umschäumung oder eine andere Abdeckung des Deckels (nicht gezeigt) im Bereich der Anbindungsvorrichtung 1 durchgehend zu gestalten, so dass ein zusätzliches Kunststoffverblendungsteil oder eine unerwünschte Verdünnung der PU-Umschäumung vermieden werden kann. Weiterhin ist bei der Erfindung von Vorteil, dass lediglich ein Befestigungspunkt erforderlich ist und beispielsweise ein Ausrichten der Halteplatte, wie es im Stand der Technik erforderlich ist, um beide Befestigungsschrauben eindrehen zu können, vermieden werden kann. Insgesamt müssen weniger Teile für die Montage gehandhabt werden, so dass die Montage vereinfacht ist. Durch die schwenkbare Lagerung des Bolzens im Betätigungshebel können somit Bauteile eingespart und der Gesamtaufbau erheblicht vereinfacht werden. Insbesondere sind auch Deckel in einfacher Art und Weise montierbar, welche eine umlaufende, insbesondere im Bereich der Anbindungsvorrichtung 1 zur optischen Abdeckung der Betätigungskinematik, durchgehende Umschäumung aufweisen.

### Bezugszeichenliste:

- 1: Anbindungsvorrichtung
- 2: Halteeinrichtung
- 3: Betätigungshebel
- 4: Lagerbolzen
- 104: Mittelachse
- 5: freies Ende
- 6: Ausnehmung
- 7: Gleitschicht
- 8: Gleitfläche
- 9: zylindrischer Abschnitt
- 10: umlaufender Bund
- 11: erster Schenkel
- 12: Vorsprung
- 13: Stufe
- 14: korrespondierende Ausnehmung
- 15: Unterlegscheibe
- 16: zweiter Schenkel
- 17: bombierte Abschrägung
- 18: freies Ende
- 19: Kragen
- 20: zentrale Durchgangsöffnung
- 21: Innengewinde
- 22: Befestigungsschraube
- 23: Unterlegscheibe
- 24: Vorsprung
- 25: Stirnseite
- 26: Montagerichtung

- 100: Betätigungshebel
- 101: freies Ende
- 102: Richtung
- 103: Befestigungsbolzen
- 104: Mittelachse
- 105: Kunststoffbuchse

- 106: Halteplatte
- 107: Befestigungsöffnung
- 108: Halteeinrichtung
- 109: Montagerichtung
- 110: Fahrzeugaußenseite
- 111: Fahrzeuginnenseite
- 112: Befestigungsmittel

- d: Abstand

## Patentansprüche

1. Anbindungsvorrichtung für eine Halteeinrichtung (2) eines Deckels eines öffnungsfähigen Fahrzeugdaches an einer Betätigungskinematik, bestehend aus einem Betätigungshebel (3) mit einem Lagerbolzen (4), aufweisend eine Mittelachse (104), um die der Betätigungshebel (3) relativ zum Deckel schwenkbar gelagert ist, **dadurch gekennzeichnet, dass** der Lagerbolzen (4) bzgl. des Betätigungshebels (3) drehbar gelagert ist und an einem zu einer Fahrzeuginnenseite (111) weisenden Bereich eine Aufnahmeeinrichtung (10, 13) für die Halteeinrichtung (2) besitzt, wobei die Halteeinrichtung (2) mit einem Befestigungsmittel (22) mit der Aufnahmeeinrichtung (10, 13) bzgl. des Lagerbolzens (4) drehfest und axial fest verbunden ist.

2. Anbindungsvorrichtung nach Anspruch 1, **dadurch gekennzeichnet, dass** der Lagerbolzen (4) unverlierbar im Betätigungshebel (3) gelagert ist.

3. Anbindungsvorrichtung nach Anspruch 1 oder 2, **dadurch gekennzeichnet, dass** der Lagerbolzen (4) am zur Fahrzeugaußenseite (110) hin gewandten Ende (18) plastisch verformt, insbesondere vertaumelt ist.

4. Anbindungsvorrichtung nach einem der vorangegangenen Ansprüche, **dadurch gekennzeichnet, dass** der Betätigungshebel (3) eine Gleitschicht (7), insbesondere aus Kunststoff aufweist, die mit dem Lagerbolzen (4) zusammenwirkt.

5. Anbindungsvorrichtung nach Anspruch 4,
**dadurch gekennzeichnet, dass** die Gleitschicht (7) im Querschnitt u-förmig ist und als Umspritzung einer Lageröffnung (6) des Betätigungshebels (3) ausgebildet ist.

6. Anbindungsvorrichtung nach einem der vorangegangenen Ansprüche, **dadurch gekennzeichnet, dass** der Lagerbolzen (4) eine zentrale Durchgangsöffnung (20) mit einem Innengewinde (21) für Aufnahme einer Befestigungsschraube (22) aufweist.

7. Anbindungsvorrichtung nach einem der vorangegangenen Ansprüche, **dadurch gekennzeichnet, dass** der Lagerbolzen (4) als Aufnahmeeinrichtung für die Halteeinrichtung (2) des Deckels einen Vorsprung (12) besitzt, der mit einer Ausnehmung (14) in der Halteeinrichtung (2) korrespondiert.

8. Anbindungsvorrichtung nach einem der vorangegangenen Ansprüche, **dadurch gekennzeichnet, dass** die Halteeinrichtung (2) ein Deckelinnenblech ist.

9. Anbindungsvorrichtung nach Anspruch 7,
**dadurch gekennzeichnet, dass** der Vorsprung (12) in einer Verdrehrichtung um die Mittellängsachse (104) formschlüssig mit der Ausnehmung (14) zusammenwirkt.

10. Anbindungsvorrichtung nach Anspruch 7,
**dadurch gekennzeichnet, dass** der Vorsprung (12) zumindest eine Abplattung aufweist und die Ausnehmung (14) als korrespondierende Formöffnung ausgebildet ist, so dass die Halteeinrichtung drehfest formschlüssig auf dem Vorsprung (12) sitzt.

11. Anbindungsvorrichtung nach Anspruch 7 oder 9 oder 10,
**dadurch gekennzeichnet, dass** die Ausnehmung (14) z.B. in Fahrzeughochrichtung als Langloch ausgebildet ist.

12. Anbindungsvorrichtung nach einem der vorangegangenen Ansprüche, **dadurch gekennzeichnet, dass** der Deckel eine umlaufende, insbesondere im Bereich der Anbindungsstellen zur Betätigungskinematik durchgehende Umschäumung aufweist, die die Anbindungsvorrichtung (1) bei ausgestelltem Deckel außenseitig optisch abdeckt.

## Claims

1. Connector device on a retainer device (2) for a cover of an openable vehicle roof to a kinematic actuating mechanism comprising an actuating lever (3), with a bearing pin (4), having a central axis (104), about which the actuating lever (3) is mounted pivotably relative to the cover, **characterized in that** the bearing pin (4) is mounted rotatably with regard to the actuating lever (3) and, on a region facing an inner side (111) of the vehicle, has a receiving device (10, 13) for the retainer device (2), the retainer device (2) being connected by a fastening means (22) to the receiving device (10, 13) in a rotationally fixed and axially fixed manner with regard to the bearing pin (4).

2. Connector device according to Claim 1, **characterized in that** the bearing pin (4) is mounted captively in the actuating lever (3).

3. Connector device according to Claim 1 or 2,
**characterized in that** the bearing pin (4) is plastically deformed, in particular wobble-riveted, at the end (18) facing the outer side (110) of the vehicle.

4. Connector device according to one of the preceding claims, **characterized in that** the actuating lever (3) has an anti-friction layer (7), in particular of plastic, which interacts with the bearing pin (4).

5. Connector device according to Claim 4,
**characterized in that** the anti-friction layer (7) is U-shaped in cross section and is designed as an injection-moulded encapsulation of a bearing opening (6) of the actuating lever (3).

6. Connector device according to one of the preceding claims, **characterized in that** the bearing pin (4) has a central passage opening (20) with an internal thread (21) for receiving a fastening screw (22).

7. Connector device according to one of the preceding claims, **characterized in that** the bearing pin (4) has, as receiving device for the retainer device (2) for the cover, a projection (12) which corresponds to a recess (14) in the retainer device (2).

8. Connector device according to one of the preceding claims, **characterized in that** the retainer device (2) is an inner cover panel.

9. Connector device according to Claim 7, **characterized in that** the projection (12) interacts in one direction of rotation about the central longitudinal axis (104) with the recess (14) in a form-fitting manner.

10. Connector device according to Claim 7, **characterized in that** the projection (12) has at least one flattened portion, and the recess (14) is designed as a corresponding shaped opening such that the retainer device sits in a rotationally fixed and form-fitting manner on the projection (12).

11. Connector device according to Claim 7 or 9 or 10, **characterized in that** the recess (14) is designed, for example in the vertical direction of the vehicle, as an elongated hole.

12. Connector device according to one of the preceding claims, **characterized in that** the cover has an encircling foam cladding which is continuous in particular in the region of the connecting points to the kinematic actuating mechanism and which visually covers the outside of the connector device (1) when the cover is deployed.

## Revendications

1. Système de liaison pour un dispositif de retenue (2) d'un toit de véhicule ouvrant sur une cinématique d'actionnement, constitué d'un levier d'actionnement (3) avec un boulon de palier (4), présentant un axe médian (104), autour duquel le levier d'actionnement (3) est monté de manière pivotante par rapport au toit, **caractérisé en ce que** le boulon de palier (4) est monté de manière rotative par rapport au levier d'actionnement (3) et possède un dispositif de réception (10, 13) pour le dispositif de retenue (2) au niveau d'une région tournée vers un côté intérieur du véhicule (111), le dispositif de retenue (2) étant connecté de manière solidaire en rotation par rapport au boulon de palier (4) et fixée axialement par un moyen de fixation (22) au dispositif de réception (10, 13).

2. Système de liaison selon la revendication 1,
**caractérisé en ce que** le boulon de palier (4) est monté de manière imperdable dans le levier d'actionnement (3).

3. Système de liaison selon la revendication 1 ou 2, **caractérisé en ce que** le boulon de palier (4) est déformé plastiquement au niveau de l'extrémité (18) tournée vers le côté extérieur du véhicule (110), notamment déformé par nutation.

4. Système de liaison selon l'une quelconque des revendications précédentes, **caractérisé en ce que** le levier d'actionnement (3) présente une couche glissante (7), en particulier en plastique, qui coopère avec le boulon de palier (4).

5. Système de liaison selon la revendication 4,
**caractérisé en ce que** la couche glissante (7) est en forme de U en section transversale, et est réalisée sous forme de pièce surmoulée autour d'une ouverture de palier (6) du levier d'actionnement (3).

6. Système de liaison selon l'une quelconque des revendications précédentes, **caractérisé en ce que** le boulon de palier (4) présente une ouverture de passage centrale (20) avec un filetage interne (21) pour recevoir une vis de fixation (22).

7. Système de liaison selon l'une quelconque des revendications précédentes, **caractérisé en ce que** le boulon de palier (4) possède, en tant que dispositif de réception pour le dispositif de retenue (2) du toit, une saillie (12) qui correspond à un évidement (14) dans le dispositif de retenue (2).

8. Système de liaison selon l'une quelconque des revendications précédentes, **caractérisé en ce que** le dispositif de retenue (2) est une tôle interne de toit.

9. Système de liaison selon la revendication 7,
**caractérisé en ce que** la saillie (12) coopère par engagement par coopération de forme avec l'évidement (14) dans un sens de rotation autour de l'axe médian.

10. Système de liaison selon la revendication 7,
**caractérisé en ce que** la saillie (12) présente au moins un méplat et l'évidement (14) est réalisé sous forme d'ouverture moulée correspondante, de sorte que le dispositif de retenue repose de manière solidaire en rotation par engagement par coopération de forme sur la saillie (12).

11. Système de liaison selon la revendication 7 ou 9 ou 10, **caractérisé en ce que** l'évidement (14) est réalisé sous forme de trou oblong, par exemple dans la direction verticale du véhicule.

12. Système de liaison selon l'une quelconque des revendications précédentes**, caractérisé en ce que** le toit présente un revêtement de mousse périphérique, notamment continu dans la région des points de liaison jusqu'à la cinématique d'actionnement, qui recouvre optiquement du côté extérieur le système de liaison (1) lorsque le toit est sorti.
